# NEUE EUROPÄISCHE PATENTSCHRIFT

(11) **EP 2 747 111 B2**
(45) Veröffentlichungstag und Bekanntmachung des Hinweises auf die Entscheidung über den Einspruch: **15.06.2022**
(45) Hinweis auf die Patenterteilung: 19.09.2018
(21) Anmeldenummer: 13197975.9
(22) Anmeldetag: 18.12.2013
(51) Int. Cl.: H01H 13/18, H01Q 1/22, H02K 35/02

(54) **Funkschalter**
Radio switch
Commutateur radio

(30) Priorität: 21.12.2012 DE 102012112897
(43) Veröffentlichungstag der Anmeldung: 25.06.2014
(73) Patentinhaber: Eltako GmbH, 70734 Fellbach (DE)
(72) Erfinder: Engel, Wolfgang, 35088 Battenberg/Eder (DE)
(74) Vertreter: Hoeger, Stellrecht & Partner Patentanwälte mbB

(56) Entgegenhaltungen:
- WO-A1-96/28873
- WO-A1-2011/117031
- DE-A1- 3 729 357
- DE-A1- 10 325 880
- DE-A1-102010 003 152
- DE-A1-102010 003 152
- DE-U1- 9 013 310
- DE-U1- 9 013 310
- US-A1- 2008 315 595

## Beschreibung

Die Erfindung betrifft einen Funkschalter mit einem Gehäuse, in dem ein Spannungsgenerator mit einer elastisch verformbaren Federzunge und eine Senderbaugruppe angeordnet sind, wobei die Senderbaugruppe zur Erzeugung eines Funksignals vom Spannungsgenerator mit elektrischer Energie beaufschlagbar ist, und mit einem relativ zur Federzunge bewegbaren Betätigungselement, das zur Aktivierung des Spannungsgenerators mit der Federzunge gekoppelt ist, wobei das Betätigungselement rotatorisch oder translatorisch bewegbar am Gehäuse gelagert und über mindestens ein Kraftübertragungselement mit der Federzunge gekoppelt ist.

Derartige Funkschalter werden auch als Funksensoren bezeichnet. Sie weisen ein Gehäuse auf, in dem ein Spannungsgenerator und eine Senderbaugruppe angeordnet sind. Der Spannungsgenerator umfasst eine Federzunge, mit deren Hilfe er aktiviert werden kann. Relativ zur Federzunge ist ein Betätigungselement bewegbar. Wird das Betätigungselement mechanisch bewegt, so wird die Federzunge zunehmend verformt. Bei Erreichen eines vorgegebenen Verformungsgrads aktiviert die Federzunge schlagartig den Spannungsgenerator, der daraufhin elektrische Energie erzeugt, die er der Senderbaugruppe bereitstellt. Die Senderbaugruppe sendet dann ein Funksignal aus. Das Funksignal ist codiert und kann von einer korrespondierenden Empfängerbaugruppe decodiert werden.

Mit Hilfe derartiger Funkschalter oder Funksensoren kann die Bewegung eines Gegenstands überwacht werden, indem das Betätigungselement den zu überwachenden Gegenstand kontaktiert. Führt der zu überwachende Gegenstand eine Ortsveränderung aus, so kann dadurch das Betätigungselement bewegt und ein Funksignal ausgesendet werden. Beispielsweise Möbel, Behälter, Schubladen, Türen, Fenster, Klappen, Schutzgitter, Deckel, Fassadenelemente, Seile, Gurte, Gepäckträger, Lagerböcke und bewegbare Maschinenelemente können mittels derartiger Funkschalter und Funksensoren zuverlässig überwacht werden.

Funkschalter der eingangs genannten Art sind energieautark, das heißt sie benötigen zu ihrem Betrieb keine externe Energiequelle, vielmehr gewinnen die Funkschalter ihre für den Betrieb erforderliche Energie aus dem Betätigungsvorgang, bei welchem der Spannungsgenerator in Betrieb gesetzt wird. Hierzu ist das Betätigungselement mit der elastisch verformbaren Federzunge des Spannungsgenerators gekoppelt, mit deren Hilfe der Spannungsgenerator aktiviert werden kann. Der Spannungsgenerator ist als elektrodynamischer Generator ausgebildet und umfasst eine Induktionsspule, eine Weicheisenwippe und die als Energiespeicher wirkende elastisch verformbare Federzunge. Die Induktionsspule wird in ihrer Längsachse von einem Permanentmagneten durchgriffen. Die Weicheisenwippe ist zusammen mit der häufig nach Art einer Deichsel an ihr befestigten Federzunge relativ zur Induktionsspule schwenkbeweglich. Die Weicheisenwippe hat zwei stabile Endlagen, in denen sie jeweils vom Permanentmagneten angezogen wird. Wird die Federzunge aufgrund einer Bewegung des Betätigungselements elastisch verformt, so geht die Weicheisenwippe bei Erreichen eines vorgegebenen Verformungsgrads der Federzunge schlagartig in ihre zweite Endstellung über, wobei die Federzunge entspannt wird. Dies bewirkt eine kurzzeitige Änderung des magnetischen Flusses durch die Induktionsspule, und dies wiederum führt zur Induktion eines Spannungsimpulses. Der Spannungsimpuls wird der Senderbaugruppe zugeführt, die daraufhin ein Funksignal generiert, welches über eine Funkantenne der Senderbaugruppe abgestrahlt wird.

Derartige Funkschalter oder Funksensoren werden häufig an einen zu überwachenden Gegenstand angebaut und sind aufgrund ihrer Baugröße gut erkennbar. Dies beeinträchtigt in manchen Fällen die Ästhetik des Gegenstandes, beispielsweise der Schublade eines hochwertigen Möbelstückes. Bei einer Bewegung des Betätigungselements unterliegt vor allem die elastisch verformbare Federzunge in aller Regel einer nicht unbeachtlichen mechanischen Belastung, so dass bekannte Funkschalter und Funksensoren in vielen Fällen störungsanfällig sind.

Aus der Veröffentlichung WO 96/28873 A1 ist ein Funkschalter der eingangs genannten Art bekannt, bei dem ein Permanentmagnet an einer Blattfeder gehalten ist, die mit Hilfe eines Kippschalters in Schwingung versetzt werden kann. Der Kippschalter ist um eine Schwenkachse kipp- oder schwenkbar gelagert und trägt auf seiner Rückseite, die einer Bedienoberfläche abgewandt ist, einen senkrecht zur Schwenkachse ausgerichteten Kipparm. Am freien Ende des Kipparms ist ein Zusatzmagnet angeordnet. Wird der Kippschalter betätigt, so führt der Kipparm eine Schwenkbewegung um die Schwenkachse aus und der am freien Ende des Kipparms angeordnete Zusatzmagnet zieht die Federzunge zusammen mit dem daran festgelegten Permanentmagneten in Richtung auf eine Spule und gibt die Federzunge anschließend wieder frei, so dass diese zusammen mit dem Permanentmagneten zu einer Schwingung angeregt wird. Unter der Wirkung des hin und her schwingenden Permanentmagneten wird in der Spule eine elektrische Spannung induziert.

Aus der Veröffentlichung US 2008/315595 A1 ist ein Funkschalter bekannt, bei dem ein Magnetkreis einen feststehenden und einen bewegbaren Teil aufweist. Am feststehenden Teil ist eine Spule gehalten und der bewegbare Teil trägt einen Permanentmagneten und kann zwischen zwei Endstellungen um eine Schwenkachse hin und her verschwenkt werden. Der bewegbare Teil weist eine Federplatte auf, die von einer Betätigungseinrichtung mit einer Kraft beaufschlagt werden kann, so dass der bewegbare Teil zusammen mit dem Permanentmagneten eine abrupte Schwenkbewegung ausführt und dadurch in der Spule eine elektrische Spannung induziert wird.

Aus der Veröffentlichung WO 2011/117031 A1 ist ein Funkschalter bekannt, bei dem ein Permanentmagnet mittels einer Blattfeder relativ zu einer Spule bewegt werden kann. Die Blattfeder kann alternativ zu einer Schraubenfeder zum Einsatz kommen, die mittels eines Krafteinleitungselements kollinear zu ihrer Längsachse mit einer Betätigungskraft beaufschlagt werden kann.

Aufgabe der vorliegenden Erfindung ist es, einen Funkschalter der eingangs genannten Art derart weiterzubilden, dass er eine kompaktere Ausgestaltung aufweist und weniger störungsempfindlich ist.

Diese Aufgabe wird durch einen Funkschalter mit den Merkmalen von Patentanspruch 1 gelöst.

Das Betätigungselement ist am Gehäuse des Funkschalters gelagert, wobei es eine Rotations- oder Translationsbewegung ausführen kann. Über mindestens ein Kraftübertragungselement ist das Betätigungselement mit der Federzunge derart gekoppelt, dass das Kraftübertragungselement bei einer Bewegung des Betätigungselements auf die Federzunge eine Aktivierungskraft ausübt, die senkrecht zur Federzunge ausgerichtet ist. Die Aktivierungskraft wirkt somit als Normalkraft auf die Federzunge. Dies hat zur Folge, dass die Federzunge lediglich um ihre Längsachse in gewünschter Weise elastisch verformt, nicht aber von quer einwirkenden Kräften gestaucht, gezogen oder verdreht wird. Auch eine störende Reibeinwirkung auf die Federzunge wird zuverlässig vermieden. Die Gefahr einer Beeinträchtigung der Federzunge durch störende Querkräfte ist somit gering. Der erfindungsgemäße Funkschalter zeichnet sich daher durch eine geringe Störungsempfindlichkeit und somit durch eine lange Lebensdauer aus.

Außerdem weist der erfindungsgemäße Funkschalter aufgrund der rotatorischen oder translatorischen Lagerung des Betätigungselements am Gehäuse eine sehr kompakte Ausgestaltung auf.

Der erfindungsgemäße Funkschalter eignet sich aufgrund seiner kompakten Ausgestaltung und seiner geringen Störungsempfindlichkeit insbesondere als Einbauinstallation, die beispielsweise in einen Fenster- oder Türrahmen oder eine Schubladenführung eingebaut werden kann und von außen nicht ohne Weiteres erkennbar ist.

Das Betätigungselement kann insbesondere in Form eines Schaltfingers ausgebildet sein, der entgegen der Wirkung einer federelastischen Rückstellkraft aus einer ersten Endstellung in eine zweite Endstellung bewegbar ist. Der Schaltfinger kann beispielsweise eine Schwenk- oder Schiebebewegung ausführen, wobei er vorteilhafterweise an einer Seite des Gehäuses positioniert ist.

Von Vorteil ist es, wenn sich die Federzunge im unbelasteten Zustand in einer Ebene (nachfolgend "Federebene" genannt) erstreckt und das mindestens eine Kraftübertragungselement im Gehäuse längs einer senkrecht zur Federebene ausgerichteten Achse verschiebbar gelagert ist. Durch Bewegen des Betätigungselements kann das Kraftübertragungselement senkrecht zur Federebene verschoben werden.

Das Zusammenwirken des Betätigungselements mit dem mindestens einen Kraftübertragungselement erfolgt vorzugsweise über mindestens eine Steuerkulisse. Über die Steuerkulisse kann eine Bewegung des Betätigungselements auf das Kraftelement übertragen werden.

Bei einer vorteilhaften Ausführungsform der Erfindung ist am Betätigungselement mindestens eine Steuerkulisse angeordnet, an der ein Kraftübertragungselement gleitend anliegt. Die Steuerkulisse kann beispielsweise in Form einer Steuerkurve ausgebildet sein, an der ein Kraftübertragungselement bei einer Bewegung des Betätigungselements entlanggleitet, wobei das Kraftübertragungselement relativ zur Federzunge eine Bewegung ausführt und hierbei die Federzunge mit einer senkrecht zur Federzunge ausgerichteten Aktivierungskraft beaufschlägt.

Die mindestens eine Steuerkulisse ist vorteilhafterweise in Form einer Rampe oder einer Kante ausgebildet.

Günstigerweise ist die Steuerkulisse mit dem Betätigungselement einstückig verbunden.

Bei einer vorteilhaften Ausführungsform der Erfindung ist das mindestens eine Kraftübertragungselement entgegen der Wirkung einer elastischen Rückstellkraft in Richtung auf die Federzunge bewegbar.

Es kann vorgesehen sein, dass der Funkschalter nur ein einziges Kraftübertragungselement aufweist, das entgegen der Wirkung einer elastischen Rückstellkraft bewegbar ist, wenn das Betätigungselement in einer ersten Richtung bewegt wird. Wird die Bewegung des Betätigungselements umgekehrt, so führt auch das Kraftübertragungselement unter der Wirkung der Rückstellkraft eine umgekehrte Bewegung durch.

Vorzugsweise ist eine Druckfeder fluchtend zum Kraftübertragungselement angeordnet. Durch eine Bewegung des Betätigungselements kann das Kraftübertragungselement in Richtung auf die Druckfeder verschoben werden, so dass die Druckfeder komprimiert wird. Gibt das Betätigungselement das Kraftübertragungselement wieder frei, so drückt die Druckfeder das Kraftübertragungselement in seine Ausgangsstellung zurück.

Die elastisch verformbare Federzunge des Spannungsgenerators weist günstigerweise zwei einander abgewandte flache Seiten auf.

Von Vorteil ist es, wenn an einer Seite der Federzunge ein Kraftübertragungselement und an der anderen Seite der Federzunge eine Druckfeder anliegt. Ein Abschnitt der Federzunge ist somit zwischen dem Kraftübertragungselement und der Druckfeder positioniert.

Um eine Belastung der Federzunge durch Querkräfte zu vermeiden, ist es günstig, wenn das mindestens eine Kraftübertragungselement eine ballig ausgestaltete Kontaktfläche aufweist, die an die Federzunge anlegbar ist. Die Kontaktfläche ist somit nach Art eines Kugelsegments ausgestaltet. Die Bereitstellung der balligen Kontaktfläche stellt sicher, dass die Federzunge vom Kraftübertragungsglied nur mit Normalkräften, nicht aber auch mit Querkräften beaufschlagbar ist.

Gemäß der Erfindung ist das mindestens eine Kraftübertragungselement kugelförmig ausgebildet. Die kugelförmige Ausgestaltung hat nicht nur den Vorteil, dass vom Kraftübertragungselement lediglich senkrecht zur Federzunge ausgerichtete Aktivierungskräfte auf die Federzunge übertragbar sind, sondern sie hat darüber hinaus den Vorteil, dass das Kraftübertragungselement nur geringen Reibungskräften unterliegt und nicht verkanten kann.

Günstig ist es, wenn das mindestens eine Kraftübertragungselement in einem Führungsglied linear verschiebbar geführt ist. Dies macht die Bewegung des mindestens einen Kraftübertragungselements besonders leichtgängig und die Gefahr, dass das Kraftübertragungselement verkantet, kann besonders gering gehalten werden.

Mindestens ein Führungsglied ist günstigerweise als Führungsschacht ausgestaltet, in dem mindestens ein Kraftübertragungselement linear verschiebbar geführt ist.

Günstig ist es, wenn das Gehäuse mindestens einen Führungsschacht ausbildet.

Bei einer vorteilhaften Ausführungsform ist der Führungsschacht senkrecht zur unbelasteten Federzunge ausgerichtet.

Von Vorteil ist es, wenn der Führungsschacht das Gehäuse vollständig durchgreift.

Der mindestens eine Führungsschacht kann beispielsweise als das Gehäuse durchgreifende Bohrung oder Durchbruch ausgestaltet sein.

Bevorzugt ist der mantelseitige Umfang der Bohrung bzw. des Durchbruchs im Wesentlichen, vorzugsweise vollständig, umlaufend geschlossen.

Der Führungsschacht kann von der Federzunge in zwei Schachtbereiche unterteilt werden, die jeweils auf einer Seite der Federzunge angeordnet sind und die günstigerweise jeweils ein Kraftübertragungselement aufnehmen.

Alternativ kann vorgesehen sein, dass in einem Schachtbereich ein Kraftübertragungselement und im anderen Schachtbereich eine das Kraftübertragungselement mit einer elastischen Rückstellkraft beaufschlagende Rückstellfeder positioniert sind.

Der erfindungsgemäße Funkschalter weist bei einer vorteilhaften Ausgestaltung der Erfindung ein einziges Kraftübertragungselement auf, wobei das Kraftübertragungselement eine Aussparung aufweist, in die die Federzunge eintaucht.

Die Aussparung des Kraftübertragungselements kann beispielsweise in Form einer das Kraftübertragungselement in Umfangsrichtung umgebenden Ringnut oder in Form einer an einer Außenseite des Kraftübertragungselements angeordneten schlitzförmigen Vertiefung ausgestaltet sein.

Zumindest ein Kraftübertragungselement ist günstigerweise unverdrehbar und linear bewegbar im Gehäuse gehalten. Beispielsweise kann zumindest ein Kraftübertragungselement ein Mehrkantprofil, insbesondere ein Vierkantprofil aufweisen, das in einem komplementär zum Mehrkantprofil ausgestalteten Führungsschacht unverdrehbar und längs des Führungsschachts linear bewegbar gehalten ist.

Alternativ oder ergänzend kann vorgesehen sein, dass zumindest ein Kraftübertragungselement im Gehäuse um eine Längsachse des Kraftübertragungselements drehbar und linear bewegbar gehalten ist. Bei einer derartigen Ausgestaltung ist das Risiko besonders gering, dass das Kraftübertragungselement verkantet.

Zumindest ein Kraftübertragungselement kann beispielsweise nach Art eines Bolzens oder Stifts ausgestaltet sein.

Von besonderem Vorteil ist es, wenn der Funkschalter zwei Kraftübertragungselemente aufweist, die die Federzunge alternierend mit einander entgegen gerichteten Aktivierungskräften beaufschlagen. Wie bereits eingangs erwähnt, kann die Federzunge durch eine Bewegung des Betätigungselements zunehmend elastisch verformt werden, wobei sie sich bei Erreichen eines vorgegebenen Verformungsgrades schlagartig entspannt und hierbei die mit ihr gekoppelte Weicheisenwippe des Spannungsgenerators schlagartig aus einer ersten Endlage in eine zweite Endlage bewegt, so dass in der Induktionsspule eine elektrische Spannung induziert wird. Wird das Betätigungselement in eine erste Richtung bewegt, so kann eines der beiden Kraftübertragungselemente eine erste Normalkraft auf die Federzunge ausüben, so dass sich diese zunehmend in einer ersten Richtung verformt, um sich bei Erreichen eines vorgegebenen Verformungsgrades schlagartig zu entspannen. Wird das Betätigungselement in die entgegen gerichtete Richtung bewegt, so kann die Federzunge vom zweiten Kraftübertragungselement mit einer der ersten Normalkraft entgegen gerichteten zweiten Normalkraft beaufschlagt werden und dadurch in die entgegen gerichtete Richtung so weit verformt werden, bis sie sich bei Erreichen eines vorgegebenen Verformungsgrades erneut schlagartig entspannt. Die Bereitstellung von zwei Kraftübertragungselementen, die die Federzunge alternierend mit einander entgegen gerichteten Aktivierungskräften beaufschlagen, ermöglicht es somit auf konstruktiv einfache Weise, die Federzunge bei einer hin und her gehenden Bewegung des Betätigungselements nacheinander in einander entgegen gerichtete Richtungen zu verformen.

Die beiden Kraftübertragungselemente sind günstigerweise identisch als Kugeln ausgebildet.

Das Betätigungselement weist bei Einsatz von zwei Kraftübertragungselementen günstigerweise zwei Steuerkulissen auf, an die jeweils ein Kraftübertragungselement gleitend anlegbar ist.

Die beiden Steuerkulissen können beispielsweise jeweils in Form einer Rampe oder einer Kante ausgebildet sein.

Von besonderem Vorteil ist es, wenn die beiden Steuerkulissen in Bewegungsrichtung des Betätigungselements versetzt zueinander angeordnet sind. Bei einer Bewegung des Betätigungselements können die Kraftübertragungselemente an der ihnen jeweils zugeordneten Steuerkulisse entlanggleiten. Hierbei ist es günstig, wenn bei einer Bewegung des Betätigungselements zunächst eine erste Steuerkulisse so weit von dem ihr zugeordneten ersten Kraftübertragungselement wegbewegt wird, dass sie das erste Kraftübertragungselement freigibt und sich dieses frei bewegen kann, und dass anschließend die zweite Steuerkulisse derart an das ihr zugeordnete zweite Kraftübertragungselement anlegbar ist, dass dieses bei einer Fortsetzung der Bewegung des Betätigungselements von der zweiten Steuerkulisse in Richtung auf die Federzunge bewegt wird. Die Federzunge kann sich dann frei verformen, ohne dass sie vom ersten Kraftübertragungselement in ihrer Verformung behindert wird. Die in Bewegungsrichtung des Betätigungselements zueinander versetzte Anordnung der beiden Steuerkulissen stellt somit auf konstruktiv einfache Weise sicher, dass die Federzunge bei einer Bewegung des Betätigungselements jeweils nur von einem der beiden Kraftübertragungselemente mit einer Aktivierungskraft beaufschlagt wird, wohingegen das andere Kraftübertragungselement die Verformung der Federzunge nicht beeinträchtigt. Bevorzugt ist das Betätigungselement zwischen zwei Endstellungen hin und her bewegbar, wobei bei einer Bewegung des Betätigungselements von einer Endstellung in die andere Endstellung jeweils eines der beiden Kraftübertragungselemente von einer der beiden Steuerkulissen mit einer Kraft in Richtung auf die Federzunge beaufschlagbar und das andere Kraftübertragungselement von der anderen Steuerkulisse freigebbar ist. Wie bereits erwähnt, ermöglicht dies in vorteilhafter Weise eine freie Verformbarkeit der Federzunge in Abhängigkeit von der Bewegungsrichtung des Betätigungselements.

Eine besonders kompakte Ausgestaltung des erfindungsgemäßen Funkschalters wird bei einer bevorzugten Ausführungsform dadurch erzielt, dass das Gehäuse zwei Gehäusehälften aufweist, die zwischen sich eine parallel oder koplanar zur unbelasteten Federzunge ausgerichtete Trennebene definieren, und dass das Betätigungselement um eine parallel oder senkrecht zur Trennebene ausgerichtete Dreh- oder Schwenkachse oder entlang einer parallel zur Trennebene ausgerichteten Schiebeachse beweglich am Gehäuse gelagert ist.

Es kann beispielsweise vorgesehen sein, dass das Gehäuse quaderartig ausgebildet ist, wobei das Betätigungselement entlang einer Längs- oder Querseite des Gehäuses parallel zur Trennebene verschiebbar am Gehäuse gelagert ist.

Alternativ kann vorgesehen sein, dass das Betätigungselement aus einer eingeschwenkten Stellung, in der es an einer Außenseite des Gehäuses anliegt, um eine senkrecht zur Trennebene ausgerichtete Schwenkachse in eine ausgeschwenkte Stellung verschwenkbar ist, in der es vom Gehäuse schräg oder senkrecht absteht.

Es kann auch vorgesehen sein, dass das Betätigungselement um eine senkrecht zur Trennebene ausgerichtete Drehachse frei drehbar am Gehäuse gelagert ist.

Der Funkschalter kann beispielsweise nach Art eines Schiebeschalters, eines Kippschalters oder eines Drehschalters ausgebildet sein.

Bevorzugt weist das Betätigungselement zwei Seitenwangen auf, die über einen Steg miteinander verbunden sind, wobei die Seitenwangen auf ihren einander zugewandten Seiten jeweils eine Steuerkulisse aufweisen und über die Steuerkulissen eine senkrecht zur Bewegungsrichtung des Betätigungselements ausgerichtete Kraft auf mindestens ein Kraftübertragungselement übertragbar ist.

Die beiden Seitenwangen sind günstigerweise an einander abgewandten Außenseiten des Gehäuses des Funkschalters angeordnet. Das Gehäuse kann außenseitig Ausnehmungen oder Führungen aufweisen, in denen jeweils eine Seitenwange angeordnet ist. Ein die Seitenwangen miteinander verbindender Steg kann das Gehäuse durchgreifen. Alternativ kann der Steg ebenfalls an einer Außenseite des Gehäuses positioniert sein.

Von Vorteil ist es, wenn zwischen den beiden Seitenwangen zwei fluchtend zueinander ausgerichtete Kraftübertragungselemente angeordnet sind, die zwischen sich einen Endbereich der Federzunge des Spannungsgenerators aufnehmen.

Bevorzugt beaufschlagt das Betätigungselement mit seinen Steuerkulissen das mindestens eine Kraftübertragungselement alternierend an dessen den Breitseiten der Federzunge abgewandten Stirnseiten.

Das Betätigungselement ist bei einer vorteilhaften Ausgestaltung der Erfindung als schwenkbar am Gehäuse gelagerter Schwenkhebel ausgebildet.

Der Schwenkhebel weist bevorzugt einen U-förmigen Querschnitt auf.

Günstig ist es, wenn der Schwenkhebel um eine senkrecht zur unbelasteten Federzunge ausgerichtete Schwenkachse schwenkbar ist.

Die Schwenkachse des Schwenkhebels ist günstigerweise senkrecht zur Trennebene der beiden Gehäusehälften ausgerichtet.

Eine besonders kompakte Bauform wird bei einer vorteilhaften Ausführungsform der Erfindung dadurch erzielt, dass eine der beiden Gehäusehälften den Spannungsgenerator und die andere Gehäusehälfte die Senderbaugruppe aufnimmt, wobei der Spannungsgenerator und die Senderbaugruppe seitlich nebeneinander angeordnet sind. Eine derartige Ausgestaltung hat unter anderem den Vorteil, dass sie auf einfache Weise montiert werden kann. In ersten Montageschritten kann der Spannungsgenerator in eine erste Gehäusehälfte und die Senderbaugruppe in eine zweite Gehäusehälfte eingesetzt werden, und in einem nachfolgenden Montageschritt können die beiden Gehäusehälften zusammengefügt werden, wobei elektrisch leitende Kontaktelemente eine elektrisch leitfähige Verbindung zwischen dem Spannungsgenerator und der Senderbaugruppe herstellen können.

Das Betätigungselement ist bei einer bevorzugten Ausgestaltung als U-förmiges Schiebeteil ausgebildet, das an einer Seite des Gehäuses verschiebbar gelagert ist. Das Gehäuse kann hierzu Führungselemente, beispielsweise Führungsnuten aufweisen, die jeweils einen Führungsabschnitt des U-förmigen Schiebeteils aufnehmen.

Alternativ kann vorgesehen sein, dass das Betätigungselement als am Gehäuse frei drehbar gelagerter Drehkörper ausgestaltet ist.

Der Drehkörper kann beispielsweise als Doppelrad ausgebildet sein, das eine erste Radscheibe und eine zweite Radscheibe aufweist, die über einen Steg miteinander verbunden sind. Die beiden Radscheiben können jeweils an einer Seite des Gehäuses positioniert sein, und an den einander zugewandten Innenseiten der Radscheiben kann jeweils eine Steuerkulisse angeordnet sein, über die eine Drehbewegung des Doppelrades in eine parallel zum Steg ausgerichtete Axialbewegung eines Kraftübertragungselements übertragen werden kann.

Bei einer alternativen Ausgestaltung der Erfindung ist das Betätigungselement als Schwenkbügel ausgebildet, der ein entlang mindestens einer Außenseite des Gehäuses verlaufendes erstes Bügelteil und ein parallel zur Trennebene ausgerichtetes, das Gehäuse zumindest teilweise durchgreifendes zweites Bügelteil aufweist, wobei das zweite Bügelteil die Schwenkachse des Schwenkbügels definiert und in einem abgekröpften Bügelteilabschnitt ein Kraftübertragungselement trägt. Das erste Bügelteil ragt aus dem Gehäuse hervor und kann eine Schwenkbewegung ausführen. Die Schwenkbewegung führt dazu, dass der abgekröpfte Bügelteilabschnitt des zweiten Bügelteils das an ihm gehaltene Kraftübertragungselement anhebt oder absenkt, so dass bei einer Schwenkbewegung des Schwenkbügels eine senkrecht zur Federzunge ausgerichtete Aktivierungskraft auf die Federzunge ausgeübt werden kann.

Das am abgekröpften Bügelteilabschnitt angeordnete Kraftübertragungselement ist günstigerweise in einem senkrecht zur Schwenkachse ausgerichteten Führungsschacht verschiebbar gehalten, so dass das Kraftübertragungselement lediglich eine Linearbewegung senkrecht zur Schwenkachse ausführen kann.

Die nachfolgende Beschreibung vorteilhafter Ausführungsformen der Erfindung dient im Zusammenhang mit der Zeichnung der näheren Erläuterung. Es zeigen:
- Figur 1:: eine perspektivische Darstellung einer ersten Ausführungsform eines erfindungsgemäßen Funkschalters, wobei dessen Betätigungselement eine ausgeschwenkte Stellung einnimmt;
- Figur 2:: eine perspektivische Darstellung des Funkschalters aus Figur 1, wobei das Betätigungselement eine eingeschwenkte Stellung einnimmt;
- Figur 3:: eine perspektivische Darstellung des Betätigungselements aus Figur 1;
- Figur 4:: eine perspektivische Darstellung des Funkschalters aus Figur 1 nach Art einer Explosionszeichnung;
- Figur 5:: eine Teilschnittansicht des Funkschalters aus Figur 2;
- Figur 6:: eine Teilschnittansicht entsprechend Figur 5 einer zweiten Ausführungsform der Erfindung;
- Figur 7:: eine perspektivische Teildarstellung einer Ausführungsform eines Funkschalters;
- Figur 8:: eine perspektivische Teildarstellung einer weiteren Ausführungsform eines Funkschalters;
- Figur 9:: eine Teilansicht einer weiteren Ausführungsform eines Funkschalters;
- Figur 10:: eine perspektivische Teildarstellung einer weiteren Ausführungsform eines Funkschalters;
- Figur 11:: eine perspektivische Teildarstellung einer weiteren Ausführungsform eines Funkschalters;
- Figur 12:: eine perspektivische Darstellung einer Ausführungsform der Erfindung, wobei ein verschiebbares Betätigungselement eine erste Schiebestellung einnimmt;
- Figur 13:: eine perspektivische Darstellung des Funkschalters aus Figur 12, wobei das verschiebbare Betätigungselement eine zweite Schiebestellung einnimmt;
- Figur 14:: eine perspektivische Darstellung des Gehäuses des Funkschalters aus Figur 12;
- Figur 15:: eine perspektivische Darstellung des verschiebbaren Betätigungselements aus Figur 12, und
- Figur 16:: eine perspektivische Darstellung einer Ausführungsform eines erfindungsgemäßen Funkschalters beim Zusammenwirken mit einem zu überwachenden leiterartigen Gegenstand.

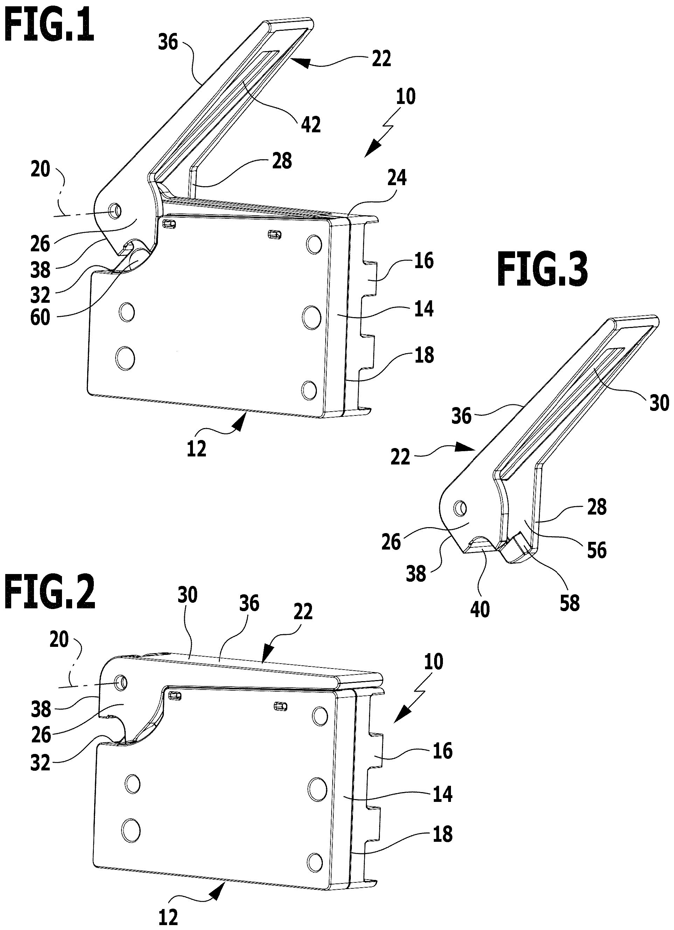

In den Figuren 1 bis 5 ist schematisch eine erste Ausführungsform eines erfindungsgemäßen Funkschalters dargestellt, der insgesamt mit dem Bezugszeichen 10 belegt ist. Er umfasst ein quaderförmiges Gehäuse 12 mit einer ersten Gehäusehälfte 14 und einer zweiten Gehäusehälfte 16, die unter Ausbildung einer Trennebene 18 zusammengefügt werden können.

Am Gehäuse 12 ist um eine senkrecht zur Trennebene 18 ausgerichtete Schwenkachse 20 schwenkbar ein als doppelarmiger Schwenkhebel 22 ausgestaltetes Betätigungselement gehalten. In Figur 1 nimmt der Schwenkhebel 22 eine ausgeschwenkte Stellung ein und in Figur 2 ist der Schwenkhebel 22 in einer eingeschwenkten Stellung dargestellt. In der eingeschwenkten Stellung liegt der Schwenkhebel 22 an einer Längsseite 24 des Gehäuses 12 an.

Wie insbesondere aus Figur 3 deutlich wird, weist der Schwenkhebel 22 einen U-förmigen Querschnitt auf. Er umfasst zwei Seitenwangen 26, 28, die über einen Steg 30 einstückig miteinander verbunden sind. Die beiden Seitenwangen 26, 28 sind jeweils in einer seitlichen Ausnehmung 32 des Gehäuses 12 angeordnet und über einen Schwenkzapfen 34 miteinander verbunden. Der Schwenkzapfen 34 durchgreift die beiden Gehäusehälften 14 und 16 und definiert die Schwenkachse 20 des Schwenkhebels 22.

In der eingeschwenkten Stellung erstreckt sich ein erster Hebelarm 36 des Schwenkhebels 22 entlang der Längsseite 24 des Gehäuses 12, und ein zweiter Hebelarm 38 erstreckt sich im Wesentlichen senkrecht zum ersten Hebelarm 36 und ist im Bereich der seitlichen Ausnehmungen 32 positioniert. Die beiden Seitenwangen 26, 28 sind im Bereich des zweiten Hebelarms 38 über eine Traverse 40 starr miteinander verbunden. Die Traverse 40 bildet beim Verschwenken des Schwenkhebels 22 in die in Figur 1 dargestellte ausgeschwenkte Stellung ein Anschlagelement, das die Schwenkbewegung des Schwenkhebels 22 begrenzt.

Der Schwenkhebel 22 ist mit Hilfe einer Rückstellfeder, die im dargestellten Ausführungsbeispiel als Schenkelfeder 42 ausgestaltet ist, federelastisch in seine ausgeschwenkte Stellung vorgespannt. Unter der Wirkung der Schenkelfeder 42 kann der Schwenkhebel 22 aus seiner ausgeschwenkten Stellung in seine eingeschwenkte Stellung verschwenkt werden.

Der Funkschalter 10 ist energieautark ausgestaltet, er benötigt also keine externe Energiequelle. Vielmehr weist der Funkschalter 10 zur Energieerzeugung einen Spannungsgenerator 44 auf, der von einer Ausnehmung 46 der ersten Gehäusehälfte 14 aufgenommen wird und eine Induktionsspule 48 sowie eine Weicheisenwippe 50 umfasst, an der eine elastisch verformbare Federzunge 52 einseitig festgelegt ist. Die Induktionsspule 48 wird von einem Permanentmagneten durchgriffen und ist in der ersten Gehäusehälfte 14 ortsfest festgelegt.

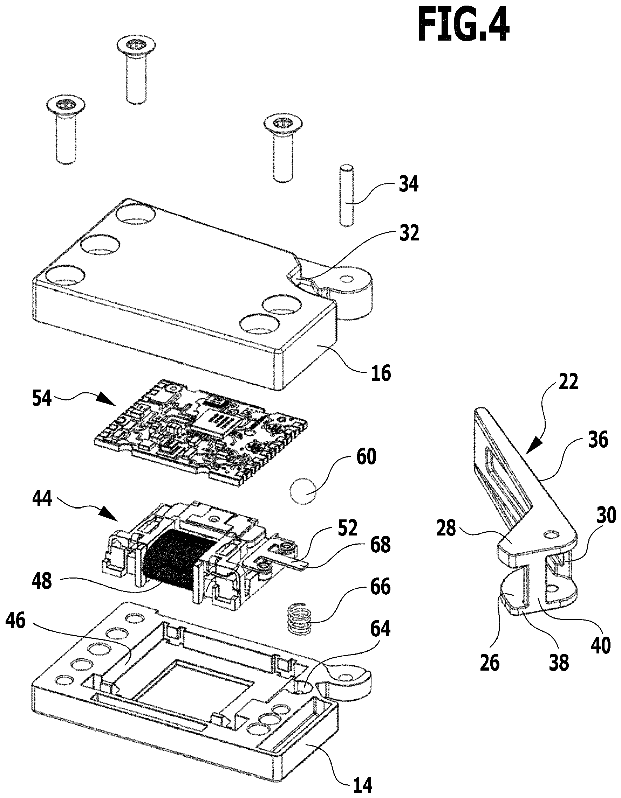

Die Weicheisenwippe 50 weist in üblicher Weise zwei stabile Endlagen auf, in denen sie jeweils vom Permanentmagneten angezogen wird. Eine schlagartige Schwenkbewegung der Weicheisenwippe 50 relativ zur Induktionsspule 48 kann durch Verformen der Federzunge 52 erzielt werden. Durch Einwirkung einer nachfolgend näher erläuterten Aktivierungskraft kann die Federzunge 52 zunehmend aus einer Federebene, in der sie sich im unbelasteten Zustand, wie in Figur 4 dargestellt, erstreckt und die parallel oder koplanar zur Trennebene 18 ausgerichtet ist, verformt werden. Erreicht die Federzunge 52 einen vorgegebenen Verformungsgrad, so geht die Weicheisenwippe 50 aufgrund der einwirkenden Federkraft schlagartig aus ihrer ursprünglichen Endlage in die andere Endlage über und die Federzunge 52 entspannt sich. Die abrupte Bewegung der Weicheisenwippe 50 hat zur Folge, dass in der Induktionsspule 48 eine elektrische Spannung induziert wird.

Zusätzlich zum Spannungsgenerator 44 weist der Funkschalter 10 eine Senderbaugruppe 54 auf, die von einer in der Zeichnung nicht dargestellten Ausnehmung der zweiten Gehäusehälfte 16 aufgenommen wird und die seitlich neben dem Spannungsgenerator 44 positioniert ist. Über an sich bekannte und deshalb zur Erzielung einer besseren Übersicht in der Zeichnung nicht dargestellte elektrische Kontaktfedern ist die Senderbaugruppe 54 mit der Induktionsspule 48 elektrisch verbunden. Dies ermöglicht es, der Senderbaugruppe 54 elektrische Energie bereitzustellen durch Aktivierung des Spannungsgenerators 44 mittels der Federzunge 52. Wird der Senderbaugruppe 54 elektrische Energie zur Verfügung gestellt, so generiert diese ein codiertes Funksignal, welches über eine Funkantenne der Senderbaugruppe 54 abgestrahlt wird.

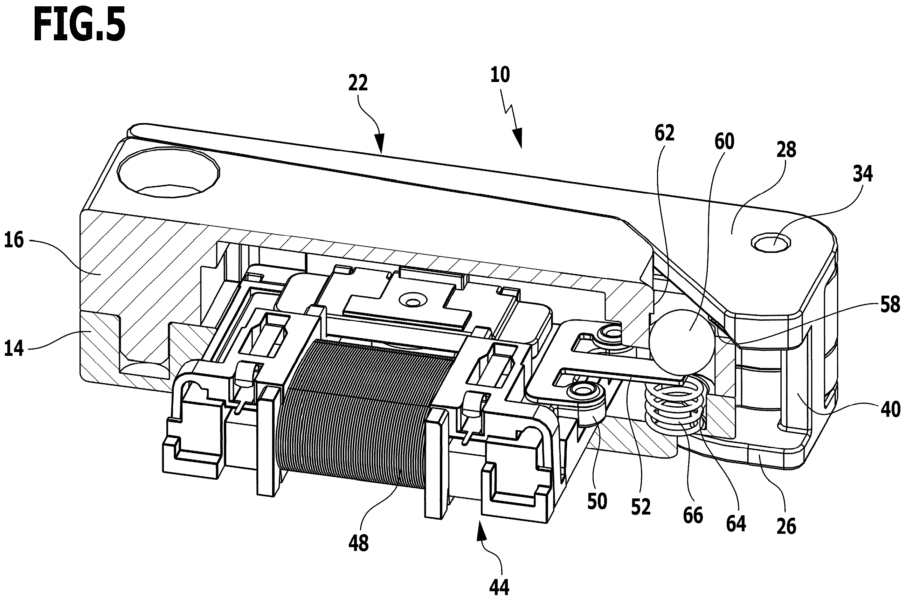

Eine Verformung der Federzunge 52 wird durch eine Bewegung des Schwenkhebels 22 erzielt. Der Schwenkhebel 22 weist auf der der Seitenwange 26 zugewandten Innenseite 56 der Seitenwange 28 eine Steuerkulisse 58 auf. Dies wird insbesondere aus Figur 3 deutlich. Die Steuerkulisse 58 wirkt mit einem Kraftübertragungselement 60 zusammen, das im dargestellten Ausführungsbeispiel kugelförmig ausgebildet und in einem Führungsschacht 62 der zweiten Gehäusehälfte 16 in Längsrichtung des Führungsschachts 62, das heißt parallel zur Schwenkachse 20 des Schwenkhebels 22 verschiebbar gehalten ist. Fluchtend zum Führungsschacht 62 weist die erste Gehäusehälfte 14 einen Federschacht 64 auf, in dem eine Druckfeder 66 positioniert ist. Ein freies Federende 68 der Federzunge 52 ist zwischen dem Kraftübertragungselement 60 und der Druckfeder 66 angeordnet. Dies wird insbesondere aus Figur 5 deutlich.

Die nach Art einer Rampe ausgebildete Steuerkulisse 58 weist an der Innenseite 56 der Seitenwange 28 eine derartige Position auf, dass sie in der eingeschwenkten Stellung des Schwenkhebels 22 einen Abstand zum Kraftübertragungselement 60 aufweist. Wird der Schwenkhebel 22 in seine ausgeschwenkte Stellung bewegt, so nähert sich die Steuerkulisse 58 dem kugelförmigen Kraftübertragungselement 60 so weit an, dass dieses an der Steuerkulisse 58 entlanggleitet und hierbei in axialer Richtung zur Druckfeder 66 verschoben wird. Dadurch wird die Federzunge 52 mit einer senkrecht auf sie einwirkenden Aktivierungskraft beaufschlagt, so dass sie bei einer weiteren Schwenkbewegung des Schwenkhebels 22 eine zunehmende elastische Verformung erfährt. Wird ein vorgegebener Verformungsgrad erreicht, so führt die Weicheisenwippe 50 schlagartig eine Wippbewegung aus und die Federzunge 52 entspannt sich, wobei in der Induktionsspule 48 ein Spannungsimpuls induziert wird. Wird der Schwenkhebel 22 in die entgegengesetzte Richtung zurückgeschwenkt, so gibt die Steuerkulisse 58 das kugelförmige Kraftübertragungselement frei, das anschließend von der Druckfeder 66 in Richtung auf die Seitenwange 28 verschoben wird, so dass die Kraftbeaufschlagung der Federzunge 52 entfällt. Die Federzunge 52 nimmt dann wieder ihre ursprüngliche Gestalt ein, in der nun die Druckfeder 66 die Funktion des Kraftübertragungselements in entgegengesetzter Richtung übernimmt und auch in dieser Endlage der Federzunge 52 einen Spannungsimpuls induziert. Die Federzunge 52 führt also bei der Hin- und Her-Bewegung des Schwenkhebels 22 ein spiegelsymmetrisches Wechselspiel aus, wobei in jeder der beiden Endlagen ein Funksignal abgestrahlt wird.

Der Funkschalter 10 eignet sich insbesondere zur Überwachung der Bewegung eines Gegenstands. Hierzu kann der Schwenkhebel 22 in seiner eingeschwenkten Stellung den zu überwachenden Gegenstand kontaktieren. Wird der zu überwachende Gegenstand vom Schwenkhebel 22 entfernt, so führt der Schwenkhebel 22 unter der Wirkung der Schenkelfeder 42 eine Schwenkbewegung aus, und dies wiederum hat zur Folge, dass mittels der Federzunge 52 und des Spannungsgenerators 44 eine elektrische Spannung erzeugt wird, so dass von der Senderbaugruppe 54 ein codiertes Funksignal abgegeben werden kann.

Der Funkschalter 10 weist eine sehr lange Lebensdauer auf und zeichnet sich durch eine sehr kompakte Ausgestaltung aus. Er eignet sich insbesondere als Einbauinstallation, die beispielsweise in einen Fenster- oder Türrahmen integriert werden kann, um ein Fenster oder eine Tür zu überwachen. In gleicher Weise kann der Funkschalter 10 auch zur Überwachung anderer Gegenstände verwendet werden, beispielsweise zur Überwachung von Behältern, Schubladen, Klappen, Leisten, Schutzgittern, Deckeln, Fassadenelementen, Seilen, Gurten, Lagerböcken und Maschinenelementen.

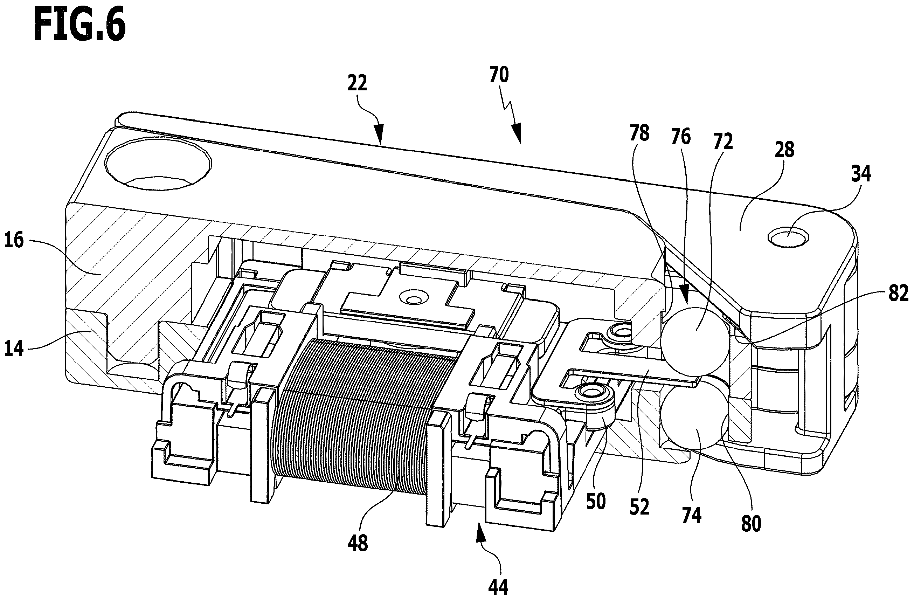

In Figur 6 ist eine zweite Ausführungsform eines erfindungsgemäßen Funkschalters dargestellt, der insgesamt mit dem Bezugszeichen 70 belegt ist. Der Funkschalter 70 ist ebenso wie die nachfolgend erläuterten Funkschalter 90, 110, 120, 130, 140, 170 und 210 weitgehend identisch ausgestaltet wie der voranstehend unter Bezugnahme auf die Figuren 1 bis 5 erläuterte Funkschalter 10. Für identische Bauteile werden daher in den Figuren 6 bis 16 dieselben Bezugszeichen verwendet wie in den Figuren 1 bis 5 und bezüglich dieser Bauteile wird zur Vermeidung von Wiederholungen auf die voranstehenden Erläuterungen Bezug genommen.

Vom Funkschalter 10 unterscheidet sich der in Figur 6 dargestellte Funkschalter 70 dadurch, dass er ein erstes Kraftübertragungselement 72 und ein zweites Kraftübertragungselement 74 aufweist, die jeweils kugelförmig ausgebildet sind und in einem das Gehäuse 12 parallel zur Schwenkachse 20 durchgreifenden Führungsschacht 76 angeordnet sind. Das Federende 68 der Federzunge 52 taucht seitlich in den Führungsschacht 76 ein, so dass dieser von der Federzunge 52 in einen ersten Schachtbereich 78 und einen zweiten Schachtbereich 80 unterteilt wird. In jedem der beiden Schachtbereiche 78, 80 ist ein Kraftübertragungselement 72 bzw. 74 angeordnet.

Ein weiterer Unterschied zwischen dem Funkschalter 10 und dem Funkschalter 70 besteht darin, dass beim Funkschalter 70 sowohl an der Innenseite der Seitenwange 28 als auch an der Innenseite der Seitenwange 26 eine Steuerkulisse angeordnet ist. In Figur 6 ist lediglich die an der Innenseite der Seitenwange 28 positionierte erste Steuerkulisse 82 erkennbar. Die zweite Steuerkulisse ist in Schwenkrichtung des Schwenkhebels 22 versetzt zur ersten Steuerkulisse 82 an der Innenseite der Seitenwange 26 positioniert. Über die Steuerkulissen können die Kraftübertragungselemente 72 und 74 in einander entgegengesetzte Richtungen entlang des Führungsschachts 76 verschoben werden. Ausgehend von der in Figur 6 dargestellten eingeschwenkten Stellung des Schwenkhebels 22 gibt bei einem Ausschwenken des Schwenkhebels 22 zunächst die dem zweiten Kraftübertragungselement 74 zugeordnete, in der Zeichnung nicht dargestellte zweite Steuerkulisse das zweite Kraftübertragungselement 74 frei, so dass dieses im zweiten Schachtbereich 80 frei beweglich ist, und bei einer weitergehenden Schwenkbewegung trifft die erste Steuerkulisse 82 auf das erste Kraftübertragungselement 72, so dass dieses in Richtung auf die Federzunge 52 verschoben wird und dadurch die Federzunge 52 verbiegt. Der Biegevorgang der Federzunge 52 wird hierbei durch das zweite Kraftübertragungselement 74 in keiner Weise beeinträchtigt. Erreicht die Federzunge 52 beim Ausschwenken des Schwenkhebels 22 unter der Wirkung des ersten Kraftübertragungselements 72 einen vorgegebenen Verformungsgrad, so entspannt sie sich schlagartig und in der Induktionsspule 48 wird in der bereits voranstehend erläuterten Weise ein Spannungsimpuls induziert, unter dessen Wirkung von der Senderbaugruppe 54 ein codiertes Funksignal abgegeben wird.

Wird der Schwenkhebel 22 des Funkschalters 70 ausgehend von seiner ausgeschwenkten Stellung in Richtung auf das Gehäuse 12 zurück verschwenkt, so gibt zunächst die erste Steuerkulisse 82 das erste Kraftübertragungselement 72 frei und anschließend trifft die zweite Steuerkulisse auf das zweite Kraftübertragungselement 74, so dass dieses in Richtung auf die Federzunge 52 bewegt wird und dadurch die Federzunge 52 bis zur Erreichung eines vorgegebenen Verformungsgrads verbiegt. Wiederum wird bei Überschreiten des vorgegebenen Verformungsgrads ein Spannungsimpuls generiert, der zur Folge hat, dass die Senderbaugruppe 54 ein codiertes Funksignal abgibt.

Eine hin und her gehende Bewegung des Schwenkhebels 22 hat somit beim Funkschalter 70 zur Folge, dass nacheinander zwei Funksignale abgegeben werden.

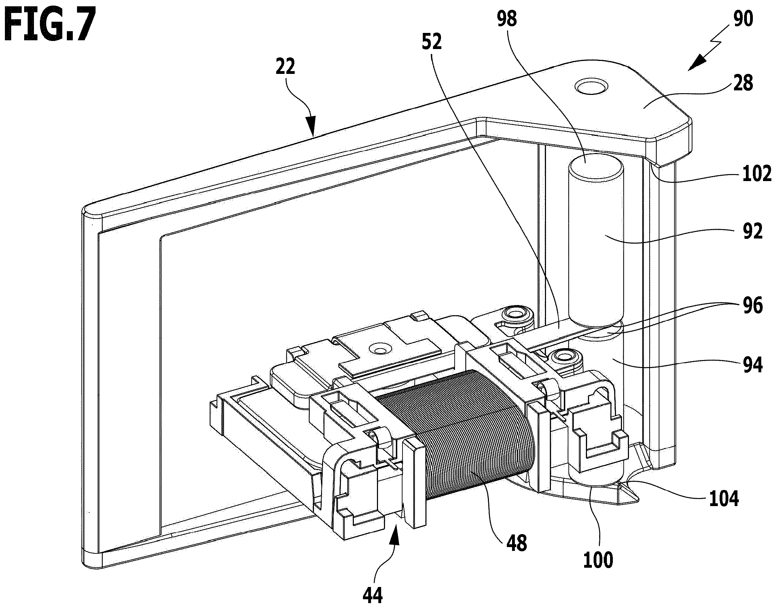

In Figur 7 ist in Form einer perspektivischen Teildarstellung schematisch eine Ausführungsform eines Funkschalters dargestellt, der insgesamt mit dem Bezugszeichen 90 belegt ist. Dieser unterscheidet sich vom voranstehend erläuterten Funkschalter 70 im Wesentlichen dadurch, dass statt zweier kugelförmiger Kraftübertragungselemente zwei Kraftübertragungselemente 92, 94 in Form von Rundstiften zum Einsatz kommen. Die Rundstifte weisen einander zugewandt jeweils ballige Kontaktflächen 96 auf, die jeweils an einer Seite der Federzunge 52 anliegen. Mit ihren den balligen Kontaktflächen 96 abgewandten Endflächen 98, 100 wirken die beiden Kraftübertragungselemente 92, 94 jeweils mit einer Steuerkulisse 102 bzw. 104 zusammen, die an den Innenseiten der Seitenwangen 26 und 28 des Schwenkhebels 22 des Funkschalters 90 angeordnet sind. Wiederum sind die beiden Steuerkulissen 102, 104 in Bewegungsrichtung des Schwenkhebels 22 versetzt zueinander angeordnet, so dass jeweils eines der beiden Kraftübertragungselemente 92, 94 frei beweglich ist, wenn das andere Kraftübertragungselement an der ihm zugeordneten Steuerkulisse entlanggleitet.

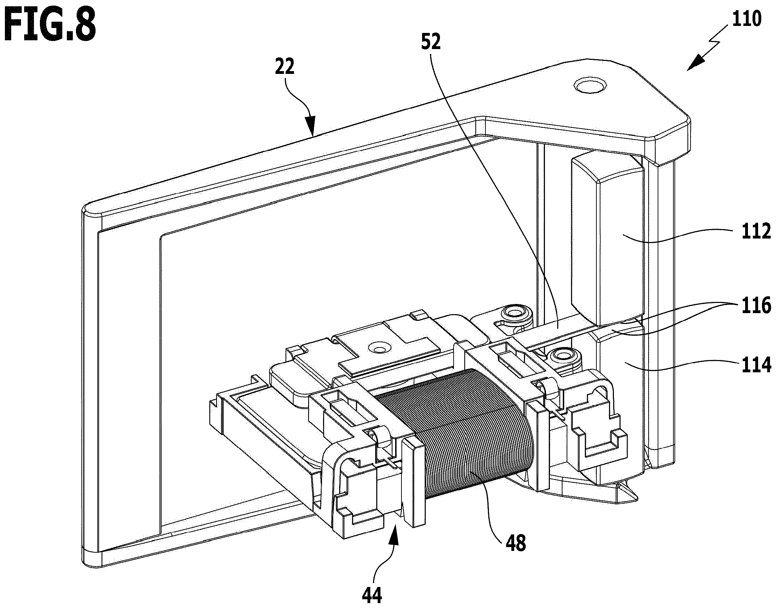

In Figur 8 ist eine Ausführungsform eines Funkschalters schematisch dargestellt, der insgesamt mit dem Bezugszeichen 110 belegt ist. Er unterscheidet sich von dem voranstehend erläuterten Funkschalter 90 dadurch, dass statt zylindrisch ausgestalteter Kraftübertragungselemente zwei Kraftübertragungselemente 112, 114 zum Einsatz kommen, die jeweils in Form eines Vierkants ausgestaltet sind. Im Unterschied zu den Kraftübertragungselementen 92, 94 des Funkschalters 90 sind die Kraftübertragungselemente 112, 114 des Funkschalters 110 in einem viereckigen Führungsschacht des Gehäuses 12 unverdrehbar geführt.

Auch die Kraftübertragungselemente 112, 114 weisen einander zugewandte ballige Kontaktflächen 116 auf, mit denen sie an die Federzunge 52 anlegbar sind. Die balligen Kontaktflächen 116 stellen sicher, dass von den Kraftübertragungselementen 112, 114 bei einer Schwenkbewegung des Schwenkhebels 22 lediglich Normalkräfte auf die Federzunge 52 ausgeübt werden kann.

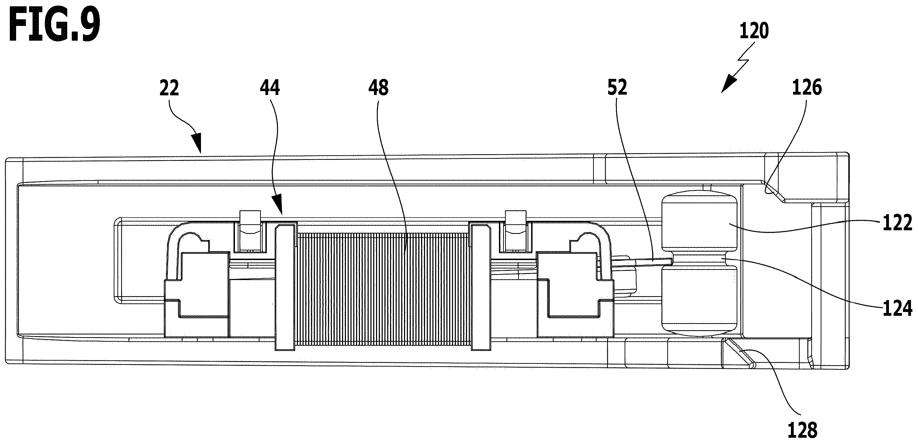

In Figur 9 ist eine Ausführungsform eines Funkschalters schematisch dargestellt, der insgesamt mit dem Bezugszeichen 120 belegt ist. Im Unterschied zu den voranstehend erläuterten Funkschaltern 70, 90 und 110 kommt beim Funkschalter 120 nur ein einziges Kraftübertragungselement 122 zum Einsatz, das zwischen den beiden Seitenwangen 26, 28 des Schwenkhebels 22 angeordnet ist und das in Höhe der Federzunge 52 eine Ausnehmung in Form einer außenseitigen Ringnut 124 aufweist. Das freie Federende 68 der Federzunge 52 taucht in die Ringnut 124 ein.

Auch das Kraftübertragungselement 122 des Funkschalters 120 ist in einem Führungsschacht des Gehäuses 12 verschiebbar gelagert und kann mit Hilfe von an den Innenseiten der Seitenwangen 26, 28 angeordneten Steuerkulissen 126, 128 im Führungsschacht hin und her bewegt werden, wenn der Schwenkhebel 22 eine hin und her gehende Schwenkbewegung ausführt.

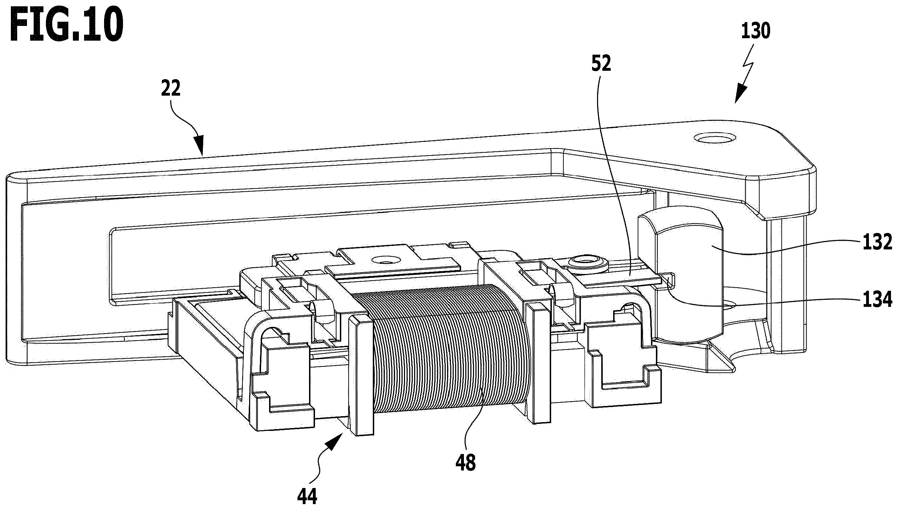

In Figur 10 ist eine Ausführungsform eines Funkschalters schematisch dargestellt, der insgesamt mit dem Bezugszeichen 130 belegt ist. Der Funkschalter 130 ist weitgehend identisch ausgebildet wie der Funkschalter 120, wobei wiederum nur ein einziges Kraftübertragungselement 132 zum Einsatz kommt. Während das Kraftübertragungselement 122 des Funkschalters 120 zylindrisch ausgestaltet und im zugeordneten Führungsschacht um die Schachtlängsachse drehbar ist, ist das Kraftübertragungselement 132 des Funkschalters 130 nach Art eines Vierkants ausgebildet und im zugeordneten Führungsschacht des Gehäuses 12 unverdrehbar gehalten.

Das Kraftübertragungselement 132 weist auf seiner der Federzunge 52 zugewandten Seite eine schlitzförmige Ausnehmung 134 auf, in die das freie Federende 68 der Federzunge 52 eintaucht.

Den voranstehend erläuterten Funkschaltern 10, 70, 90, 110, 120 und 130 gemeinsam ist der Einsatz des Schwenkhebels 22, der um eine senkrecht zur Trennebene 18 ausgerichtete Schwenkachse 20 verschwenkbar am Gehäuse 12 gelagert ist und somit in der Trennebene 18 bewegt werden kann.

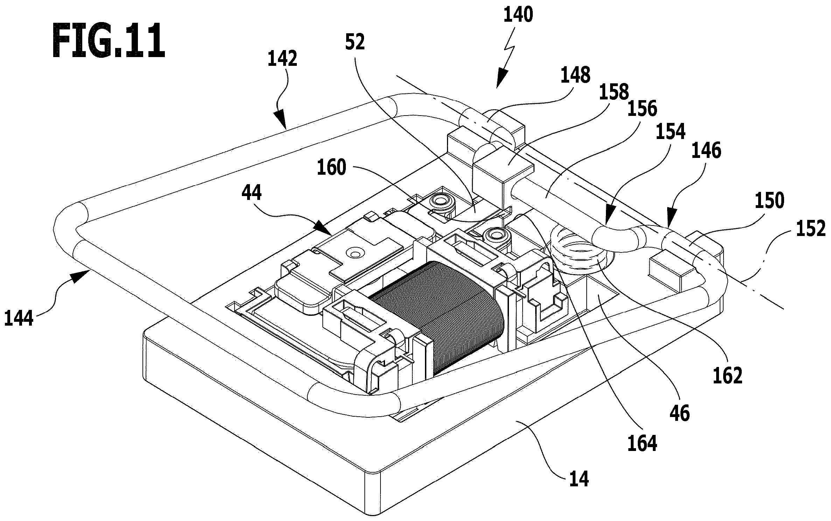

Im Gegensatz hierzu ist in Figur 11 eine Ausführungsform eines Funkschalters dargestellt, der insgesamt mit dem Bezugszeichen 140 belegt ist und bei der statt des voranstehend erläuterten Schwenkhebels 22 ein Schwenkbügel 142 zum Einsatz kommt. Der Schwenkbügel 142 ist als in sich geschlossener Drahtbügel ausgestaltet und umfasst ein entlang von drei Außenseiten des Gehäuses 12 verlaufendes erstes Bügelteil 144 und ein das Gehäuse 12 durchgreifendes zweites Bügelteil 146. Das erste Bügelteil 144 ist U-förmig ausgestaltet und einstückig mit dem zweiten Bügelteil 146 verbunden.

Das zweite Bügelteil 146 definiert mit seinen dem ersten Bügelteil 144 zugewandten Endabschnitten 148 und 150, die fluchtend zueinander ausgerichtet sind, eine Schwenkachse 152 des Schwenkbügels 142. Die Schwenkachse 152 ist parallel zur Trennebene 18 der beiden Gehäusehälften 14, 16 des Gehäuses 12 ausgerichtet. Zwischen den beiden Endabschnitten 148, 150 weist das zweite Bügelteil 146 einen abgekröpften Bügelteilabschnitt 154 auf, der einen parallel zu den Endabschnitten 148, 150 verlaufenden Mittelabschnitt 156 definiert. Am Mittelabschnitt 156 ist ein Kraftübertragungselement 158 gleitend gehalten, das auf seiner dem Mittelabschnitt 156 abgewandten Seite eine schlitzförmige Ausnehmung 160 aufweist. Das freie Federende 68 der Federzunge 52 taucht in die schlitzförmige Ausnehmung 160 des Kraftübertragungselements 158 ein.

Seitlich neben dem Kraftübertragungselement 148 ist eine Rückstellfeder 162 angeordnet, die den Mittelabschnitt 156 mit einer Federkraft beaufschlagt und dadurch dem Schwenkbügel 142 eine bestimmte Schwenkstellung vorgibt. Aus dieser Schwenkstellung, die in Figur 11 dargestellt ist, kann der Schwenkbügel entgegen der Wirkung der Rückstellfeder 162 verschwenkt werden.

Das Kraftübertragungselement 158 taucht mit seinem dem Mittelabschnitt 156 abgewandten Endbereich in einen Führungsschacht 164 der ersten Gehäusehälfte 14 ein und ist im Führungsschacht 164 unverdrehbar gehalten.

Wird der Schwenkbügel 142 um die Schwenkachse 152 entgegen der Wirkung der Rückstellfeder 162 verschwenkt, so führt das Kraftübertragungselement 158 eine Bewegung senkrecht zur Trennebene 18 aus und die Federzunge 52 wird in entsprechender Weise, wie dies voranstehend bereits im Einzelnen erläutert wurde, zunehmend verformt, so dass sie sich bei Erreichen eines vorgegebenen Verformungsgrades schlagartig entspannt und vom Funkschalter 140 ein codiertes Funksignal abgegeben werden kann.

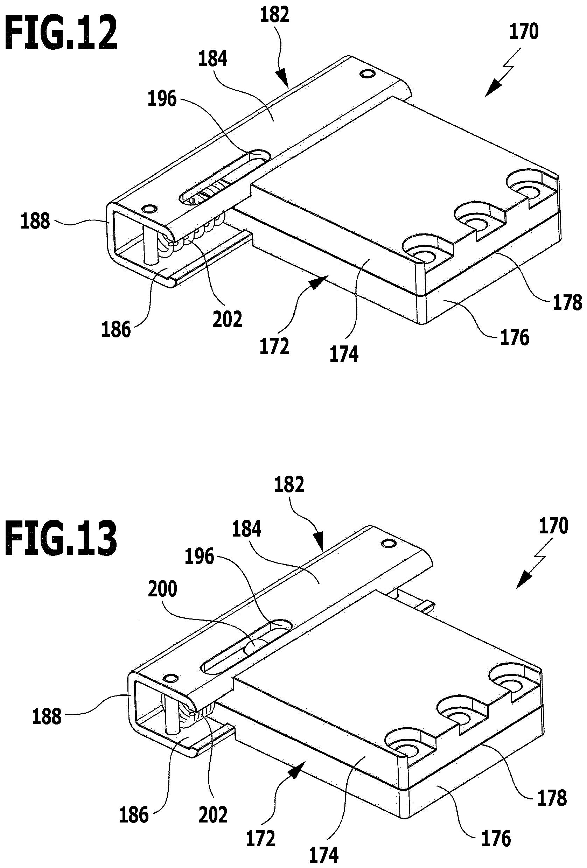

Die voranstehend erläuterten Funkschalter 10, 70, 90, 110, 120, 130 und 140 sind als Schwenk- oder Kippschalter ausgebildet, indem sie jeweils ein Betätigungselement aufweisen, das um eine Schwenkachse verschwenkbar ist. Im Gegensatz hierzu ist in den Figuren 12 bis 15 schematisch eine Ausführungsform eines erfindungsgemäßen Funkschalters dargestellt, der insgesamt mit dem Bezugszeichen 170 belegt ist und der einen Schiebeschalter ausbildet. Der Funkschalter 170 weist ein quaderförmiges Gehäuse 172 mit zwei Gehäusehälften 174, 176 auf, die zwischen sich eine Trennebene 178 definieren. In entsprechender Weise wie die voranstehend erläuterten Funkschalter nimmt auch das Gehäuse 172 des Funkschalters 170 einen Spannungsgenerator 44 mit einer Federzunge 52 und eine Senderbaugruppe 54 auf, wobei die Federzunge 52 von zwei identisch ausgebildeten, jeweils kugelförmigen Kraftübertragungselementen mit einer senkrecht zur Federzunge 52 ausgerichteten Aktivierungskraft beaufschlagbar ist. Diesbezüglich wird zur Vermeidung von Wiederholungen auf die voranstehenden Erläuterungen Bezug genommen.

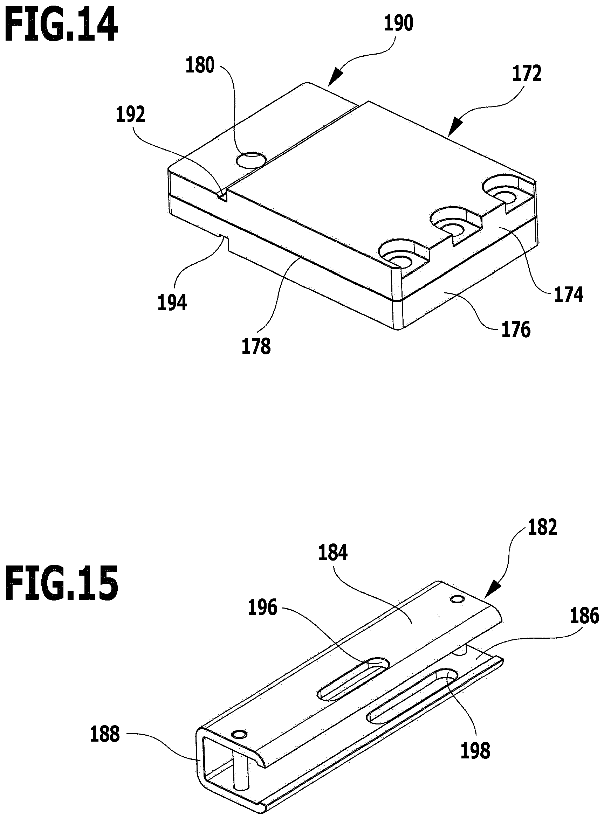

Die beiden kugelförmigen Kraftübertragungselemente des Funkschalters 170 sind in einem das Gehäuse 172 durchgreifenden Führungsschacht 180 angeordnet. Der Führungsschacht 180 ist in Figur 14 erkennbar.

Als Betätigungselement weist der Funkschalter 170 ein Schiebeteil 182 auf, das im Querschnitt U-förmig ausgebildet ist und zwei Seitenwangen 184, 186 umfasst, die über einen Steg 188 einstückig miteinander verbunden sind. Das Schiebeteil 182 kann entlang eines Führungsabschnitts 190 des Gehäuses 172 linear verschoben werden. Der Führungsabschnitt 190 weist an einander abgewandten Außenseiten des Gehäuses jeweils eine Führungsnut 192 bzw. 194 auf, in die die nach innen abgekanteten freien Enden der Seitenwangen 184, 186 eintauchen.

Die Seitenwangen 184, 186 weisen jeweils an Langloch 196, 198 auf. Die Langlöcher 196, 198 sind in Längsrichtung des Schiebeteils 182 versetzt zueinander angeordnet und deren Ränder bilden jeweils eine Steuerkulisse für ein im Führungsschacht 180 angeordnetes Kraftübertragungselement aus. Die Breite der Langlöcher 196, 198 ist geringer gewählt als der Durchmesser der kugelförmigen Kraftübertragungselemente, so dass diese lediglich mit einer Kugelkappe 200 in die Langlöcher 196, 198 eintauchen können, sofern das jeweilige Langloch 196, 198 eine Position fluchtend zum Führungsschacht 180 einnimmt.

Das Schiebeteil 182 kann zwischen einer in Figur 12 dargestellten ersten Schaltstellung und einer in Figur 13 dargestellten zweiten Schaltstellung hin und her verschoben werden. In der ersten Schaltstellung ist das Langloch 196 der ersten Seitenwange 184 versetzt zum Führungsschacht 180 angeordnet, so dass das diesem Langloch 196 zugeordnete kugelförmige Kraftübertragungselement von der ersten Seitenwange 184 in Richtung auf die Federzunge 52 gedrückt wird, die unter der Wirkung der senkrecht auf sie einwirkenden Aktivierungskraft des Kraftübertragungselements so stark verformt wird, dass sie sich nach Überschreiten des vorgegebenen Verformungsgrades schlagartig entspannt und dadurch vom Spannungsgenerator 44 in der voranstehend bereits erläuterten Art und Weise eine elektrische Spannung induziert und von der Senderbaugruppe 54 ein codiertes Funksignal abgegeben wird. In der ersten Schaltstellung des Schiebeteils 182 ist das Langloch 198 der zweiten Seitenwange 186 fluchtend zum Führungsschacht 180 angeordnet, so dass das dem Langloch 198 zugeordnete kugelförmige Kraftübertragungselement mit seiner Kugelkappe in das Langloch 198 ausweichen kann und dadurch die Verformung der Federzunge 52 in keiner Weise beeinträchtigt.

Wird das Schiebeteil 182 in seine zweite, in Figur 13 dargestellte Schaltstellung verschoben, so gibt das an der ersten Seitenwange 184 angeordnete Langloch 196 das diesem Langloch 196 zugeordnete Kraftübertragungselement frei, wohingegen das an der zweiten Seitenwange 186 angeordnete Langloch 198 eine Position versetzt zum Führungsschacht 180 einnimmt und dadurch das dem Langloch 198 zugeordnete Kraftübertragungselement in Richtung auf die Federzunge 52 drückt. Unter der Wirkung des Kraftübertragungselements wird dann die Federzunge 52 verformt und es wird wiederum ein codiertes Funksignal abgegeben.

Eine Verschiebung des Schiebeteils 192 entlang des Führungsabschnitts 190 parallel zur Trennebene 178 der beiden Gehäusehälften 174, 176 führt somit zu einer Zwangsbewegung von einem der beiden Kraftübertragungselementen senkrecht zur Trennebene 178, so dass die Federzunge 52 mit einer senkrecht auf sie einwirkenden Aktivierungskraft beaufschlagt werden kann. Das Schiebeteil 182 wird beim Funkschalter 170 mit Hilfe einer Rückstellfeder 202 selbsttätig in die in Figur 12 dargestellte erste Schaltstellung vorgespannt und kann entgegen der Wirkung der Rückstellfeder 202 in die zweite Schaltstellung bewegt werden. Der Funkschalter 170 bildet somit einen Schiebe-Tastschalter aus.

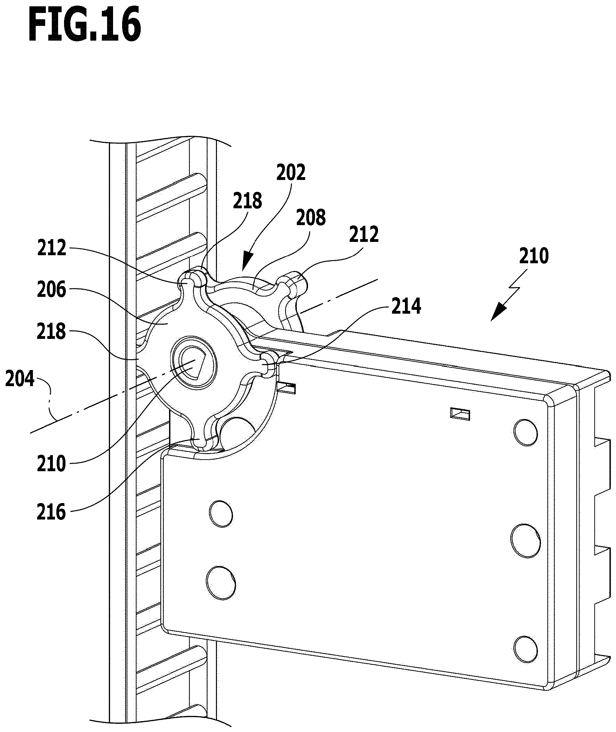

In Figur 16 ist eine Ausführungsform eines erfindungsgemäßen Funkschalters dargestellt, der insgesamt mit dem Bezugszeichen 210 belegt ist. Dieser ist weitgehend identisch ausgebildet wie die voranstehend unter Bezugnahme auf die Figuren 1 bis 10 dargestellten Ausführungsformen. Von diesen unterscheidet sich der Funkschalter 210 dadurch, dass statt eines Schwenkhebels ein Betätigungselement in Form eines Doppelrades 202 zum Einsatz kommt, das um eine Drehachse 204 frei drehbar am Gehäuse 12 gelagert ist. Das Doppelrad 202 weist zwei Seitenwangen in Form einer ersten Radscheibe 206 und einer zweiten Radscheibe 208 auf, die über einen kollinear zur Drehachse 204 ausgerichteten Steg 210 starr miteinander verbunden sind. Die beiden Radscheiben 206, 208 sind in entsprechender Weise wie die Seitenwangen 26, 28 des voranstehend erläuterten Schwenkhebels 22 jeweils in einer seitlichen Ausnehmung 32 des Gehäuses 12 angeordnet. Im Bereich der seitlichen Ausnehmung 32 wird das Gehäuse 12 des Funkschalters 210 in entsprechender Weise wie das Gehäuse 12 von einem Führungsschacht durchgriffen, in dem ein erstes Kraftübertragungselement und ein zweites Kraftübertragungselement angeordnet sind. Mittels der beiden Kraftübertragungselemente kann die Federzunge des Funkschalters 210 zur Erzeugung eines Funksignals in der voranstehend bereits erläuterten Weise verformt werden.

Die beiden Radscheiben 206, 208 sind auf ihren Umfängen zinnenartig als Zahn-Lücken-Umriss ausgebildet. Im dargestellten Ausführungsbeispiel weisen die beiden Radscheiben 206, 208 jeweils vier radial nach außen abstehende Zähne 212, 214, 216, 218 auf, wobei die beiden Radscheiben 206, 208 um eine halbe Zahnteilung gegeneinander verdreht sind. Die Flanken der Zähne 212, 214, 216 und 218 wirken jeweils als Steuerkulisse, die mit den kugelförmigen Kraftübertragungselementen zusammenwirken. Bei einer Drehung des Doppelrades 202 führen somit die Kraftübertragungselemente des Funkschalters 210 eine oszillierende Bewegung aus, wobei eines der beiden Kraftübertragungselemente in Richtung auf die Federzunge verschoben wird, während das andere Kraftübertragungselement in eine Lücke zwischen zwei Zähnen der anderen Radscheibe eintauchen kann. Der Funkschalter 210 bildet somit einen endlos drehbaren Drehschalter aus.

Die Betätigung des Doppelrades 202 kann beispielswiese mit Hilfe einer Zahnstange, eines Zahnkranzes oder auch durch einen Riementrieb erfolgen sowie durch Schrauben- und Kegelräder und auch durch Schneckengetriebe, die eine Drehmomentübertragung unter sich kreuzenden Radachsen erlauben. Es kann vorgesehen sein, dass das Doppelrad 202 drehfest mit einer Hohlwelle verbunden ist, die eine Schlüsselfläche aufweist.

## Patentansprüche

1. Funkschalter mit einem Gehäuse (12), in dem ein Spannungsgenerator (44) mit einer elastisch verformbaren Federzunge (52) und eine Senderbaugruppe (54) angeordnet sind, wobei die Senderbaugruppe (54) zur Erzeugung eines Funksignals vom Spannungsgenerator (44) mit elektrischer Energie beaufschlagbar ist, und mit einem relativ zur Federzunge bewegbaren Betätigungselement (22; 142; 182; 202), das zur Aktivierung des Spannungsgenerators (44) mit der Federzunge (52) gekoppelt ist, wobei das Betätigungselement (22; 142; 182; 202) rotatorisch oder translatorisch bewegbar am Gehäuse (12; 172) gelagert und über mindestens ein Kraftübertragungselement (60; 72, 74; 92, 94; 112, 114; 122; 132; 158) mit der Federzunge (52) gekoppelt ist, und wobei die Federzunge (52) bei einer Bewegung des Betätigungselements (22; 142; 182; 202) von einem Kraftübertragungselement (60; 72, 74; 92, 94; 112, 114; 122; 132; 158) über eine Kontaktfläche mit einer senkrecht zur Federzunge (52) ausgerichteten Aktivierungskraft beaufschlagbar ist, **dadurch gekennzeichnet, dass** das mindestens eine Kraftübertragungselement (60; 72, 74) kugelförmig ausgestaltet ist.

2. Funkschalter nach Anspruch 1, **dadurch gekennzeichnet, dass** sich die Federzunge (52) im unbelasteten Zustand in einer Federebene erstreckt und dass das mindestens eine Kraftübertragungselement (60; 72, 74; 92, 94; 112, 114; 122; 132; 158) im Gehäuse (12; 172) längs einer senkrecht zur Federebene ausgerichteten Achse verschiebbar gelagert ist.

3. Funkschalter nach Anspruch 1 oder 2, **dadurch gekennzeichnet, dass** das Betätigungselement (22; 142; 182; 202) über mindestens eine Steuerkulisse (58; 82; 102, 104; 126, 128; 196, 198) mit dem mindestens einen Kraftübertragungselement (60; 72, 74; 92, 94; 112, 114; 122; 132; 158) gekoppelt ist.

4. Funkschalter nach einem der voranstehenden Ansprüche, **dadurch gekennzeichnet, dass** das mindestens eine Kraftübertragungselement (60; 158) entgegen der Wirkung einer elastischen Rückstellkraft in Richtung auf die Federzunge (52) bewegbar ist.

5. Funkschalter nach Anspruch 4, **dadurch gekennzeichnet, dass** die Federzunge (52) zwei einander abgewandte flache Seiten aufweist, wobei an einer Seite ein Kraftübertragungselement (60) und an der anderen Seite eine Druckfeder (66) anliegt.

6. Funkschalter nach einem der voranstehenden Ansprüche, **dadurch gekennzeichnet, dass** das mindestens eine Kraftübertragungselement (60; 72, 74; 92, 94; 112, 114; 122; 132; 158) in einem Führungsglied linear verschiebbar geführt ist.

7. Funkschalter nach Anspruch 6, **dadurch gekennzeichnet, dass** zumindest ein Führungsglied als Führungsschacht (62; 76; 180) ausgestaltet ist, in dem mindestens ein Kraftübertragungselement (60; 72, 74; 92, 94; 112, 114; 122; 132; 158) linear verschiebbar geführt ist.

8. Funkschalter nach Anspruch 7, **dadurch gekennzeichnet, dass** das Gehäuse (12; 172) mindestens einen Führungsschacht (62; 76; 180) ausbildet.

9. Funkschalter nach einem der voranstehenden Ansprüche, **dadurch gekennzeichnet, dass** der Funkschalter (70; 90; 110; 170; 210) zwei Kraftübertragungselemente (72, 74; 92, 94; 112, 114) aufweist, die die Federzunge (52) alternierend mit einander entgegen gerichteten Aktivierungskräften beaufschlagen.

10. Funkschalter nach Anspruch 9, **dadurch gekennzeichnet, dass** das Betätigungselement (22; 182) zwei Steuerkulissen (102, 104; 126, 128; 196, 198) aufweist, an die jeweils ein Kraftübertragungselement (72, 74; 92, 94; 112, 114) gleitend anlegbar ist.

11. Funkschalter nach Anspruch 10, **dadurch gekennzeichnet, dass** die beiden Steuerkulissen (102, 104; 126, 128) in Bewegungsrichtung des Betätigungselements (22; 182) versetzt zueinander angeordnet sind.

12. Funkschalter nach Anspruch 10 oder 11, **dadurch gekennzeichnet, dass** das Betätigungselement (22; 182) zwischen zwei Endstellungen hin und her bewegbar ist, wobei bei einer Bewegung des Betätigungselements (22; 182) von einer Endstellung in die andere Endstellung jeweils eines der beiden Kraftübertragungselemente (72, 74; 92, 94; 112, 114) von einer der beiden Steuerkulissen (102, 104; 126, 128; 196, 198) mit einer Kraft in Richtung auf die Federzunge (52) beaufschlagbar und das andere Kraftübertragungselement (72, 74; 92, 94; 112, 114) von der anderen Steuerkulisse (102, 104; 126, 128; 196, 198) freigebbar ist.

13. Funkschalter nach einem der voranstehenden Ansprüche, **dadurch gekennzeichnet, dass** das Gehäuse (12; 172) zwei Gehäusehälften (14, 16; 174, 176) aufweist, die zwischen sich eine parallel oder koplanar zur unbelasteten Federzunge (52) ausgerichtete Trennebene (18; 178) definieren, und dass das Betätigungselement (22; 142; 182; 202) um eine parallel oder senkrecht zur Trennebene (18; 178) ausgerichtete Dreh- oder Schwenkachse oder längs einer parallel zur Trennebene (18; 178) ausgerichteten Schiebeachse beweglich am Gehäuse (12; 172) gelagert ist.

14. Funkschalter nach Anspruch 13, **dadurch gekennzeichnet, dass** das Betätigungselement (22; 182; 202) zwei Seitenwangen (26, 28; 184, 186; 206, 208) aufweist, die über einen Steg (30; 188; 210) miteinander verbunden sind, wobei die Seitenwangen (26, 28; 184, 186; 206, 208) auf ihren einander zugewandten Seiten jeweils eine Steuerkulisse (102, 104; 126, 128) aufweisen, wobei über die Steuerkulissen (102, 104; 126, 128) eine senkrecht zur Bewegungsrichtung des Betätigungselements (22; 182; 202) ausgerichtete Kraft auf mindestens ein Kraftübertragungselement (72, 74; 92, 94; 112, 114; 122; 132; 158) übertragbar ist.

15. Funkschalter nach Anspruch 14, **dadurch gekennzeichnet, dass** das Betätigungselement als schwenkbar am Gehäuse gelagerter Schwenkhebel (22) ausgestaltet ist.

## Claims

1. Radio switch having a housing (12) in which a voltage generator (44), with an elastically deformable spring tongue (52), and a transmitter assembly (54) are arranged, wherein the transmitter assembly (54) is able to be impinged with electrical energy by the voltage generator (44) for producing a radio signal, and having an actuating element (22; 142; 182; 202) which is moveable relative to the spring tongue and which is coupled to the spring tongue (52) for activating the voltage generator (44), wherein the actuating element (22; 142; 182; 202) is mounted on the housing (12; 172) so as to be moveable in a rotary or translational manner and is coupled to the spring tongue (52) by at least one force transmission element (60; 72, 74; 92, 94; 112, 114; 122; 132; 158), and wherein the spring tongue (52) upon a movement of the actuating element (22; 142; 182; 202) is able to be impinged over a contact surface by a force transmission element (60; 72, 74; 92, 94; 112, 114; 122; 132; 158) with an activating force aligned perpendicular to the spring tongue (52), **characterized in that** the at least one force transmission element (60; 72, 74) is of spherical shape.

2. Radio switch in accordance with Claim 1, **characterized in that** the spring tongue (52) in the unloaded state extends in a spring plane, and **in that** the at least one force transmission element (60; 72, 74; 92, 94; 112, 114; 122; 132; 158) is mounted in the housing (12; 172) so as to be displaceable along an axis aligned perpendicular to the spring plane.

3. Radio switch in accordance with Claim 1 or 2, **characterized in that** the actuating element (22; 142; 182; 202) is coupled to the at least one force transmission element (60; 72, 74; 92, 94; 112, 114; 122; 132; 158) by at least one control gate (58; 82; 102, 104; 126, 128; 196, 198).

4. Radio switch in accordance with any one of the preceding Claims, **characterized in that** the at least one force transmission element (60; 158) is moveable in the direction to the spring tongue (52), against the action of an elastic restoring force.

5. Radio switch in accordance with Claim 4, **characterized in that** the spring tongue (52) comprises two oppositely facing flat sides, wherein a force transmission element (60) abuts one side and a pressure spring (66) abuts the other side.

6. Radio switch in accordance with any one of the preceding Claims, **characterized in that** the at least one force transmission element (60; 72, 74; 92, 94; 112, 114; 122; 132; 158) is linearly displaceably guided in a guide member.

7. Radio switch in accordance with Claim 6, **characterized in that** at least one guide member is configured as a guide well (62; 76; 180) in which at least one force transmission element (60; 72, 74; 92, 94; 112, 114; 122; 132; 158) is linearly displaceably guided.

8. Radio switch in accordance with Claim 7, **characterized in that** the housing (12; 172) forms at least one guide well (62; 76; 180).

9. Radio switch in accordance with any one of the preceding Claims, **characterized in that** the radio switch (70; 90; 110; 170; 210) comprises two force transmission elements (72, 74; 92, 94; 112, 114) which alternatingly impinge the spring tongue (52) with activating forces directed opposite each other.

10. Radio switch in accordance with Claim 9, **characterized in that** the actuating element (22; 182) comprises two control gates (102, 104; 126, 128; 196, 198) against each of which a force transmission element (72, 74; 92, 94; 112, 114) may be placed in a sliding manner.

11. Radio switch in accordance with Claim 10 **characterized in that** the two control gates (102, 104; 126, 128) are arranged offset from each other in the movement direction of the actuating element (22; 182).

12. Radio switch in accordance with Claim 10 or 11, **characterized in that** the actuating element (22; 182) is moveable back and forth between two end positions, wherein upon a movement of the actuating element (22; 182) from one end position into the other end position, in each case one of the two force transmission elements (72, 74; 92, 94; 112, 114) is able to be impinged by one of the two control gates (102, 104; 126, 128; 196, 198) with a force in the direction to the spring tongue (52) and the other force transmission element (72, 74; 92, 94; 112, 114) is releasable by the other control gate (102, 104; 126, 128; 196, 198).

13. Radio switch in accordance with any one of the preceding Claims, **characterized in that** the housing (12; 172) comprises two housing halves (14, 16; 174, 176) which define between them a separating plane (18; 178) aligned parallel or coplanar to the unloaded spring tongue (52), and **in that** the actuating element (22; 142; 182; 202) is mounted on the housing (12; 172) so as to be moveable about a rotational or pivotal axis aligned parallel or perpendicular to the separating plane (18; 178) or along a sliding axis aligned parallel to the separating plane (18; 178).

14. Radio switch in accordance with Claim 13, **characterized in that** the actuating element (22; 182; 202) comprises two side cheeks (26, 28; 184, 186; 206, 208) which are connected to each other by a web (30; 188; 210), wherein the side cheeks (26, 28; 184, 186; 206, 208) each comprise a control gate (102, 104; 126, 128) on their sides facing each other, wherein a force aligned perpendicular to the movement direction of the actuating element (22; 182; 202) is transmittable to at least one force transmission element (72, 74; 92, 94; 112, 114; 122; 132; 158) via the control gates (102, 104; 126, 128).

15. Radio switch in accordance with Claim 14, **characterized in that** the actuating element is configured as a pivot lever (22) mounted pivotally on the housing.

## Revendications

1. Commutateur radio comprenant un boîtier (12), dans lequel sont agencés un générateur de tension (44) pourvu d'une languette flexible (52) déformable élastiquement et un module émetteur (54), dans lequel le module émetteur (54) peut être soumis par le générateur de tension (44) à l'effet d'une énergie électrique pour la génération d'un signal radio, et comprenant un élément d'actionnement (22 ; 142 ; 182 ; 202) qui peut être déplacé par rapport à la languette flexible et qui est accouplé à la languette flexible (52) pour l'activation du générateur de tension (44), dans lequel l'élément d'actionnement (22 ; 142 ; 182 ; 202) est monté sur le boîtier (12 ; 172) de manière à pouvoir se déplacer en rotation ou en translation et est accouplé à la languette flexible (52) par l'intermédiaire d'au moins un élément de transmission de force (60 ; 72, 74 ; 92, 94 ; 112, 114 ; 122 ; 132 ; 158), et dans lequel la languette flexible (52), lors d'un déplacement de l'élément d'actionnement (22 ; 142 ; 182 ; 202), peut être soumis à l'effet d'une force d'activation orientée perpendiculairement à la languette flexible (52) par un élément de transmission de force (60 ; 72, 74 ; 92, 94 ; 112, 114 ; 122 ; 132 ; 158) par l'intermédiaire d'une surface de contact, **caractérisé en ce que** l'élément ou les éléments de transmission de force (60 ; 72, 74) sont sphériques.

2. Commutateur radio selon la revendication 1, **caractérisé en ce que** la languette flexible (52), dans l'état non sollicité, s'étend dans un plan de ressort et **en ce que** l'élément ou les éléments de transmission de force (60 ; 72, 74 ; 92, 94 ; 112, 114 ; 122 ; 132 ; 158) sont montés dans le boîtier (12 ; 172) de manière à pouvoir coulisser le long d'un axe orienté perpendiculairement au plan de ressort.

3. Commutateur radio selon la revendication 1 ou 2, **caractérisé en ce que** l'élément d'actionnement (22 ; 142 ; 182 ; 202) est accouplé à l'élément ou aux éléments de transmission de force (60 ; 72, 74 ; 92, 94 ; 112, 114 ; 122 ; 132 ; 158) par l'intermédiaire d'au moins une coulisse de commande (58 ; 82 ; 102, 104 ; 126, 128 ; 196, 198).

4. Commutateur radio selon l'une quelconque des revendications précédentes, **caractérisé en ce que** l'élément ou les éléments de transmission de force (60 ; 158) peuvent être déplacés en direction de la languette flexible (52) à l'encontre de l'action d'une force de rappel élastique.

5. Commutateur radio selon la revendication 4, **caractérisé en ce que** la languette flexible (52) présente deux faces plates opposées l'une à l'autre, dans lequel un élément de transmission de force (60) s'applique contre une face et un ressort de compression (66) s'applique contre l'autre face.

6. Commutateur radio selon l'une quelconque des revendications précédentes, **caractérisé en ce que** l'élément ou les éléments de transmission de force (60 ; 72, 74 ; 92, 94 ; 112, 114 ; 122 ; 132 ; 158) sont guidés de manière à pouvoir coulisser linéairement dans un organe de guidage.

7. Commutateur radio selon la revendication 6, **caractérisé en ce qu'**au moins un organe de guidage est réalisé sous la forme d'un puits de guidage (62 ; 76 ; 180), dans lequel au moins un élément de transmission de force (60 ; 72, 74 ; 92, 94 ; 112, 114 ; 122 ; 132 ; 158) est guidé de manière à pouvoir coulisser linéairement.

8. Commutateur radio selon la revendication 7, **caractérisé en ce que** le boîtier (12 ; 172) forme au moins un puits de guidage (62 ; 76 ; 180).

9. Commutateur radio selon l'une quelconque des revendications précédentes, **caractérisé en ce que** le commutateur radio (70 ; 90 ; 110 ; 170 ; 210) présente deux éléments de transmission de force (72, 74 ; 92, 94 ; 112, 114), qui soumettent la languette flexible (52) en alternance à l'effet de forces d'activation dirigées les unes à l'encontre des autres.

10. Commutateur radio selon la revendication 9, **caractérisé en ce que** l'élément d'actionnement (22 ; 182) comprend deux coulisses de commande (102, 104 ; 126, 128 ; 196, 198) contre lesquelles respectivement un élément de transmission de force (72, 74 ; 92, 94 ; 112, 114) peut s'appliquer en glissant.

11. Commutateur radio selon la revendication 10, **caractérisé en ce que** les deux coulisses de commande (102, 104 ; 126, 128) sont décalées l'une de l'autre dans la direction de déplacement de l'élément d'actionnement (22 ; 182).

12. Commutateur radio selon la revendication 10 ou 11, **caractérisé en ce que** l'élément d'actionnement (22 ; 182) peut être déplacé en va-et-vient entre deux positions d'extrémité, dans lequel lors d'un déplacement de l'élément d'actionnement (22 ; 182) d'une position d'extrémité dans l'autre position d'extrémité, respectivement un des deux éléments de transmission de force (72, 74 ; 92, 94 ; 112, 114) peut être soumis à l'effet d'une force en direction de la languette élastique (52) par une des deux coulisses de commande (102, 104 ; 126, 128 ; 196, 198) et l'autre élément de transmission de force (72, 74 ; 92, 94 ; 112, 114) peut être libéré par l'autre coulisse de commande (102, 104 ; 126, 128 ; 196, 198).

13. Commutateur radio selon l'une quelconque des revendications précédentes, **caractérisé en ce que** le boîtier (12 ; 172) comprend deux moitiés de boîtier (14, 16 ; 174, 176), qui définissent entre elles un plan de séparation (18 ; 178) orienté de manière parallèle ou coplanaire par rapport à la languette flexible (52) non sollicitée, et **en ce que** l'élément d'actionnement (22 ; 142 ; 182 ; 202) est monté sur le boîtier (12 ; 172) de manière à pouvoir se déplacer autour d'un axe de rotation ou de pivotement orienté parallèlement ou perpendiculairement au plan de séparation (18 ; 178) ou le long d'un axe de coulissement orienté parallèlement au plan de séparation (18 ; 178).

14. Commutateur radio selon la revendication 13, **caractérisé en ce que** l'élément d'actionnement (22 ; 182 ; 202) présente deux joues latérales (26, 28 ; 184, 186 ; 206, 208), qui sont reliées l'une à l'autre par un élément jointif (30 ; 188 ; 210), dans lequel les joues latérales (26, 28 ; 184, 186 ; 206, 208) présentent sur leurs faces tournées les unes vers les autres respectivement une coulisse de commande (102, 104 ; 126, 128), dans lequel une force orientée perpendiculairement à la direction de déplacement de l'élément d'actionnement (22 ; 182 ; 202) peut être transmise sur au moins un élément de transmission de force (72, 74 ; 92, 94 ; 112, 114 ; 122 ; 132 ; 158) par l'intermédiaire des coulisses de commande (102, 104 ; 126, 128).

15. Commutateur radio selon la revendication 14, **caractérisé en ce que** l'élément d'actionnement est réalisé sous la forme d'un levier pivotant (22) monté pivotant sur le boîtier.
